# EUROPÄISCHE PATENTSCHRIFT

(11) **EP 0 697 062 B1**
(45) Veröffentlichungstag und Bekanntmachung des Hinweises auf die Patenterteilung: **25.09.1996**
(21) Anmeldenummer: 94913016.5
(22) Anmeldetag: 27.04.1994
(51) Int. Cl.: F01N 3/20, F01N 9/00, B01D 53/56

(54) **VERFAHREN UND EINRICHTUNG ZUR GESTEUERTEN EINBRINGUNG EINES REDUKTIONSMITTELS IN EIN STICKOXIDHALTIGES ABGAS**
PROCESS AND DEVICE FOR CONTROLLABLY ADDING A REDUCING AGENT INTO NITROGEN OXIDE-CONTAINING EXHAUST GAS
PROCEDE ET DISPOSITIF PERMETTANT L'APPORT REGULE D'UN AGENT REDUCTEUR DANS DES GAZ D'ECHAPPEMENT CONTENANT DE L'OXYDE NITRIQUE

(30) Priorität: 07.05.1993 DE 4315278
(43) Veröffentlichungstag der Anmeldung: 21.02.1996
(73) Patentinhaber: SIEMENS AKTIENGESELLSCHAFT, 80333 München (DE)
(72) Erfinder: SCHMELZ, Helmut, D-83209 Prien (DE)
(86) Internationale Anmeldenummer: DE9400463
(87) Internationale Veröffentlichungsnummer: WO9427035

(56) Entgegenhaltungen:
- DE-A- 3 704 030
- DE-A- 3 721 572
- DE-C- 4 217 552
- GB-A- 2 132 112
- US-A- 4 403 473
- PATENT ABSTRACTS OF JAPAN vol. 4, no. 139 (M-034) 30. September 1980 & JP,A,55 093 917 (UNITIKA) 16. Juli 1980

## Beschreibung

Die Erfindung bezieht sich auf ein Verfahren und eine Einrichtung zur gesteuerten Einbringung eines Reduktionsmittels in ein stickoxidhaltiges Abgas eines Verbrennungsmotors mit einer in der Abgasleitung eingebauten Katalysatoreinheit zur Stickoxidminderung.

Der Einsatz fossiler Energieträger in Verbrennungsmotoren bei der Traktion wirft aufgrund des Schadstoffgehalts im Abgas große Probleme in Gebieten mit hohen Fahrzeugdichten, also vor allem in den Industriestaaten, auf. Als Schadstoffe sind unter anderem Stickoxide, Kohlenwasserstoffe, Kohlenmonoxid, Oxide des Schwefels und Ruß zu nennen, die mit zu den bekannten Umweltproblemen, wie z.B. saurer Regen und Smog, beitragen.

Im Zuge eines steigenden Umweltbewußtseins und strenger gesetzlicher Auflagen bezüglich des Schadstoffausstoßes sind eine Vielzahl von Katalysatoren und Rußfiltern entwickelt worden, die zur Verringerung des Ausstoßes der obengenannten Schadstoffe beitragen. Zur Verminderung der Schadstoffe im Abgas von Ottomotoren sind beispielsweise edelmetallhaltige Katalysatoren bekannt, an denen Kohlenwasserstoffe und Kohlenmonoxid mit Stickoxiden und Restsauerstoff zu Kohlendioxid, Stickstoff und/oder Wasser umgewandelt werden. Zur Verringerung des Schadstoffausstoßes von Dieselmotoren sind sogenannte Partikelfilter bekannt, die die im Abgas enthaltenen Rußpartikel zurückhalten. Die Beseitigung der Rußpartikel erfolgt durch Abbrand im Partikelfilter. Desweiteren arbeitet man derzeit vielerorts an der Entwicklung eines geregelten Dieselkatalysators, mit dem es möglich sein soll, den Stickoxidgehalt im Abgas eines Dieselmotors erheblich zu senken. Dies ist aufgrund des hohen Restgehalts an Luftsauerstoff im Abgas mit den bekannten edelmetallhaltigen Katalysatoren, wie sie in Fahrzeugen mit Ottomotoren bei stöchiometrischer Verbrennung eingesetzt werden, nicht möglich.

Stattdessen sollen in Fahrzeugen mit Diesel- und Magermix-Motoren, also Motoren mit einer überstöchiometrischen Verbrennung, sogenannte DeNO_{X}-Katalysatoren verwendet werden, an denen die im Abgas enthaltenen Stickoxide mit einem geeigneten Reduktionsmittel, meist Ammoniak, nach dem Verfahren der selektiven katalytischen Reduktion (SCR) zu umweltfreundlichem Stickstoff und Wasser umgesetzt werden. Das Reduktionsmittel oder eine Vorstufe des Reduktionsmittels wird in Strömungs-richzung des Abgases vor dem Katalysator in das Abgas eingebracht und tritt dann in vorzugsweise homogener Vermischung mit den im Abgas enthaltenen Stickoxiden in den Katalysator ein.

Die Verbrennungsmotoren werden bei der Traktion mit variabler Last und Drehzahl betrieben. Das bedeutet, daß die pro Zeiteinheit erzeugten Stickoxidmengen und die Abgasmassenströme und -temperaturen großen Schwankungen unterliegen. Es ist derzeit keine Lösung bekannt, um die pro Zeiteinheit in das Abgas eingebrachte Reduktionsmittelmenge in einer Weise einzustellen, daß unabhängig vom Betriebszustand des Verbrennungsmotors hohe Abscheideraten für die Stickoxide bei gleichzeitig verschwindend geringem Reduktionsmittelschlupf erreicht werden. Erschwerend kommt hinzu, daß Ammoniak giftig ist und bereits bei einer Konzentrationen von nur etwa 5 ppm eine erhebliche Geruchsbelästigung für den Menschen darstellt. Aus diesem Grund ist ein Schlupf von Ammoniak unbedingt zu vermeiden.

Aus der JP-A-55 093 917 ist es bekannt, den Abgasmassenstrom, die Stickoxidkonzentration im Abgas und die Abgastemperatur sowie die Temperatur des Denitrierungskatalysators zu erfassen. Mittels dieser Daten wird entsprechend der Stickoxidrate eine Reduktionsmittelrate in das Abgas eingebracht, die die von der Temperatur des Katalysators abhängige katalytische Aktivität des Katalysators berücksichtigt. Es hat sich gezeigt, daß dieses Verfahren insbesondere bei positiven und negativen Lastsprüngen einen Reduktionsmittelschlupf bzw. einen Stickoxidschlupf nicht vermeidet.

Der Erfindung liegt daher die Aufgabe zugrunde, ein Verfahren und eine Vorrichtung zur gesteuerten Einbringung eines Reduktionsmittels in ein stickoxidhaltiges Abgas anzugeben, die die obengenannten Anforderungen erfüllen.

Bezüglich des Verfahrens wird diese Aufgabe erfindungsgemäß dadurch gelost, daß mindestens ein betriebsrelevanter Parameter des Abgases, mindestens ein betriebsrelevanter Parameter der Katalysatoreinheit und ggfs. mindestens ein betriebsrelevanter Parameter des Motors zur Bestimmung der Stickoxidrate M_{NOₓ} erfaßt werden, und daß entsprechend der Stickoxidrate M_{NOₓ} ein Zwischenwert Z₁ (M_{R}) für die Reduktionsmittelrate M_{R} bestimmt werden, der um eine von der Katalysatoreinheit desorbierte Reduktionsmittelrate M_{D} verringert oder um eine von der Katalysatoreinheit adsorbierte Reduktionsmittelrate M_{A} erhöht wird.

Bezüglich der Einrichtung wird diese Aufgabe erfindungsgemäß dadurch gelöst, daß eine Kontrolleinheit, dieser Kontrolleinheit zugeordnete Mittel zur Erfassung von mindestens einem betriebsrelevanten Parameter des Abgases, von mindestens einem betriebsrelevanten Parameter der Katalysatoreinheit und ggf. von mindestens einem betriebsrelevanten Parameter des Motors und eine der Kontrolleinheit zugeordnete Reduktions-mittelzuführungs-Einheit, mit der ein Reduktionsmittel in Strömungsrichtung des Abgases vor der Katalysatoreinheit in die Abgasleitung einbringbar ist, vorgesehen sind, wobei die Kontrolleinheit zur Einstellung der in das Abgas eingebrachten Reduktionsmittelrate M_{R} in Abhängigkeit von den betriebsrelevanten Parametern vorgesehen ist, und zwar unter Berücksichtigung einer von der Katalysatoreinheit adsorbierten Reduktionsmittelrate M_{A} oder einer von der Katalysatoreinheit desorbierten Reduktionsmittelrate M_{D}.

Hierdurch wird erreicht, daß die in das Abgas eingebrachte Reduktionsmittelrate M_{R} für alle Betriebszustände des Verbrennungsmotors, die durch eine kontinuierliche oder diskontinuierliche Aus- und Bewertung der betriebsrelevanten Parameter charakterisiert werden, ausreicht, die Stickoxide vollständig katalytisch umzusetzen. Gleichzeitig wird die Reduktionsmittelrate M_{R} aber auch so eingestellt, daß ein Schlupf des Reduktionsmittels vermieden wird. Besonders durch die Einbeziehung der betriebsrelevanten Parameter des Katalysators wird diese exakte Einstellung der Redukcionsmittelrate M_{R} erreicht. Hierdurch wird die zur katalytischen Umsetzung der Stickoxide erforderliche Reduktionsmittelrate M_{R} nicht ausschließlich entsprechend der im Abgas enthaltenen Stickoxidrate M_{NOₓ} zudosiert, sondern wird im besonderen bei positiven Lastsprüngen des Verbrennungsmotors durch die vom Katalysator desorbierte Reduktionsmitcelranen M_{D} teilweise ersetzt. Dies vermeidet eine Überdosierung des Reduktionsmittels, wodurch ein Reduktionsmittelschlupf gerade bei positiven Last sprüngen des Verbrennungsmotors vollständig vermieden wird. Dem gegenüber kann der Zwischenwert um die adsorbierte Reduktionsmittelrate M_{A} erhöht werden, wodurch immer ausreichend viel Reduktionsmittel zur Umsetzung der Stickoxide vorhanden und des weiteren der Katalysator auf einem definierten Beladungszustand mit dem Reduktionsmittel gehalten ist.

Zur Bestimmung der pro Zeiteinheit vom Motor angelieferten Stickoxidmenge, im folgenden als Stickoxidrate M_{NOₓ} bezeichnet, ist es vorteilhaft, wenn als betriebsrelevanter Parameter des Motors der Luftmassenstrom, der der Stellung der Kraftstoffeinspritzeinrichtung entsprechende Regelstangenweg, der Ladedruck und/oder die Motordrehzahl vorgehen ist. Die Erfassung dieser Parameter ist bei modernen elektronischen Dieselsteuerungen ohnehin meist üblich, so daß hierfür in den meisten fallen kein zusätzlicher Aufwand entsteht. Der Massenstrom kann beispielsweise auch rechnerisch durch die Messung der Motordrehzahl, des Ladedrucks oder der Ladelufttemperatur bei gleichzeitiger Kenntnis des Motorhubvolumens bestimmt werden. Bierdurch ist es möglich, die Stickoxidrate M_{NOₓ} durch einen Vergleich der betriebsrelevanten Parameter aus den bekannten Kennfelddaten des Motors zu bestimmen. Diese Kennfelddaten sind vorzugsweise in der Kontrolleinneit abgelegt. Diese Vorgehensweise wird insbesondere dann genutzt, wenn kein Sensor als Mittel zur Messung der Stickoxid-konzentration in der Abgasleitung eingebaut ist.

Bei Vorhandensein eines Sensors zur Messung der Stickoxidkonzentration ist es vorteilhaft, wenn als betriebsrelevanter Parameter des Abgases dessen Temperatur, dessen Druck, dessen Massenstrom und/oder dessen Stickoxidkonzentration vorgesehen ist. Dabei kann aus dem Massenstrom und der Stickoxidkonzentration des Abgases die am Katalysator ankommende Stickoxidrate M_{NO_{X}} bestimmt werden. Bei gleichzeitiger Kenntnis der Temperatur des Abgases kann, wie noch gezeigt wird, dann entsprechend dem Temperaturverlauf der katalytischen Aktivität des Katalysators eine geeignete Reduktionsmittelrate M_{R} bestimmt und in das Abgas dosiert werden.

Unter Bezugnahme auf den vorhergehenden Absatz ist es darüber hinaus vorteilhaft, wenn als betriebsrelevanter Parameter der Katalysatoreinheit deren Temperatur T, deren katalytische Aktivität k und deren Druck- und Temperaturverlauf, deren spezifische Speicherkapazität C_{R} für das Reduktionsmittel und deren Druck- und Temperaturverlauf und deren physikalische Größe, wie z.B. Geometrie, Wärmeübergang und Gewicht der katalytisch aktiven Masse, vorgesehen ist. Diese Parameter können dabei in vorteilhafter Weise in die Kontrolleinheit implementierbar sein, d.h. in einen Speicher geladen werden. Mittels dieser Parameter ist es der Kontrolleinheit bei entsprechender Ausbildung einerseits möglich, eine genaue Angabe über den momentanen Betriebszustand des Katalysators zu machen. Andererseits ist es hierdurch möglich, beispielsweise bei positiven Lastsprüngen des Motors, was im besonderen zu einem drastischen Anstieg der Abgastemperatur führt, ein genaue Aussage über die vom Katalysator pro Zeiteinheit desorbierende Reduktionsmittelmenge, im folgenden als Reduktionsmittelrate M_{D} bezeichnet, zu machen. Ferner kann bei negativen Lastsprüngen, die eine Senkung der Abgastemperatur zur Folge haben, das dadurch zusätzlich verfügbare Speichervermögen des Katalysators für das Reduktionsmittel ermittelt werden.

Eine exakte Bestimmung der desorbierten und der adsorbierten Reduktionsmittelrate M_{D} bzw. M_{A} ist zur Vermeidung eines Reduktionsmittelschlupfes und zur gleichzeitigen Bereitstellung von zur vollständigen Umsetzung der Stickoxide ausreichenden Reduktionsmittelraten M_{R} unbedingt erforderlich. Um dieses auszuführen, kann vorgesehen sein, bei der Bestimmung von M_{D} und M_{A} zu berücksichtigen, daß die spezifische Speicherkapazität C_{R} des Katalysators für das Reduktionsmittel mit steigender Abgastemperatur absinkt und mit steigendem Abgasdruck zunimmt.

Unter vorteilhafter Berücksichtigung der Tatsache, daß die katalytische Aktivität k für eine bestimmte Temperatur T(kₘₐₓ) ein Maximum erreicht und beiderseits dieser Temperatur abfällt, ist es zweckmäßig, wenn der Zwischenwert mit sinkender Abgastemperatur abgesenkt und mit steigender Abgastemperatur angehoben wird, wenn die Abgastemperatur am Katalysator niedriger als die Temperatur T(kₘₐₓ) ist, bei der der Katalysator maximale katalytische Aktivität kₘₐₓ aufweist. Dies bedeutet entsprechend, daß der Zwischenwert mit steigender Abgastemperatur abgesenkt und mit sinkender Abgastemperatur angehoben wird, wenn die Abgastemperatur am Katalysator höher als die Temperatur T(kₘₐₓ) ist.

Unter Berücksichtigung der weiteren Tatsache, daß die katalytische Aktivität k mit steigendem Abgasdruck (Absolutdruck) am Katalysator zunimmt, ist es zweckmäßig, den Zwischenwert mit steigendem Druckverlust am Katalysator (entspricht steigendem Absolutdruck) anzuheben und/oder mit fallendem Druckverlust abzusenken.

Weil bei hoher Last und hoher Drehzahl des Verbrennungsmotors hohe Abgasraumgeschwindigkeiten auftreten können, ist es vorteilhaft, wenn der Zwischenwert bei Überschreiten einer maximalen Raumgeschwindigkeit, für die der Katalysator ausgelegt ist, verringert wird. Durch diese Korrektur ist gewährleistet, daß das in das Abgas eindosierte Reduktionsmittel im Katalysator gespeichert und/oder bei der katalytischen Abreaktion mit den Stickoxiden verbraucht wird und nicht aufgrund zu hoher Abgasraumgeschwindigkeiten aus dem Katalysator ausgetragen wird. Dabei kann sich ein Korrekturfaktor bei Überschreiten der maximalen Raumgeschwindigkeit aus dem Verhältnis von der maximalen Raumgeschwindigkeit zur momentanen Raumgeschwindigkeit ergeben.

Um bei der Dosierung des Reduktionsmittels auch Alterungs-und Vergiftungseffekte des Katalysators zu berücksichtigen, ist es zweckmäßig, wenn der Zwischenwert mit zunehmender Betriebsdauer t_{B} verringert wird. Hierdurch wird vermieden, daß ein Reduktionsmittelschlupf bei alterungsbedingt nachlassen-der katalytischer Aktivität des Katalysators und/oder nachlassendem Speichervermögen des Katalysators für das Reduktionsmittel auftritt. Ein solcher Schlupf würde aber ansonsten bei unveränderter, etwa entsprechend der im Abgas enthaltenen Stickoxidrate M_{NOₓ} bemessenen Reduktionsmittelrate M_{R} auftreten.

Um bei der obenstehend genannten Berücksichtigung der Alterungs- und Vergiftungseffekte des Katalysators noch besser temperaturbedingte Alterungseffekte am Katalysator zu berücksichtigen, ist es vorteilhaft, wenn der Zwischenwert entsprechend der mit der Betriebsdauer t_{B} gewerteten Abgastemperaturen am Katalysator verringert wird. Auf diese Weise wird bei der Bestimmung der Reduktionsmittelrate M_{R} berücksichtigt, welchen absoluten Temperaturen und Temperaturgradienten der Katalysator während des Betriebs ausgesetzt war.

In vorteilhafter Ausgestaltung der Erfindung kann vorgesehen sein, die Katalysatoreinheit vor Inbetriebnahme des Verbrennungsmotors vom Reduktionsmittel und von Kohlenwasserstoffen zu befreien. Hierdurch ist der gesamte Katalysator beim Start des Verbrennungsmotors "leer". Die Kontrolleinheit kann daher bei der Einstellung der Reduktionsmittelrate M_{R} von einem genau definierten Anfangszustand bezüglich der Beladung des Katalysators mit dem Reduktionsmittel ausgehen, was zur Genauigkeitssteigerung der Reduktionsmitteldosierung beiträgt.

In besonders vorteilhafter Ausgestaltung der Erfindung umfaßt die Reduktionsmittelzuführungs-Einheit ein mittels der Kontrolleinheit einstellbares Eindüsventil für eine wäßrige Harnstofflösung. Dies ist eine technisch einfache LÖsung zur Zuführung des Reduktionsmittels. Eine wäßrige Harnstofflösung läßt sich einfach und gefahrlos im Fahrzeug mitführen und hydrolysiert einfach in einem sogenannten Hydrolysekatalysator zu Ammoniak, Kohlendioxid und Wasser. Die Katalysatoreinheit umfaßt dann vorzugsweise in Strömungsrichtung des Abgases der Reihe nach einen Hydrolyse-Katalysator, einen DeNOₓ-Katalysator und gegebenenfalls einen Oxidations-Katalysator, der als Ammoniak-Schlupfkiller und zur katalytischen Umsetzung von Kohlenwasserstoffen und Kohlenmonoxid verwendet wird.

Eine Einrichtung, die nach dem erfindungsgemäßen Verfahren arbeitet, kann auf verschiedene Weise ausgestaltet sein. Eine dieser vorteilhaften Ausgestaltungen sieht vor, daß die Kontrolleinheit einen Speicher für alle möglichen für die Bestimmung der Reduktionsmittelrate M_{R} betriebsrelevanten Parameter des Abgases, des Katalysators und gegebenenfalls des Motors umfaßt, und die Mittel zur Erfassung der betriebsrelevanten Parameter mit ihren Signalen einen entsprechenden Speicherwert für die Reduktionsmittelrate M_{R} abrufen, wobei der Speicherwert an einem Ausgang der Kontrolleinheit zur Steuerung der Reduktionsmittelzuführungseinheit anliegt.

Eine alternative, ebenso vorteilhafte Ausgestaltung sieht vor, daß die Kontrolleinheit eine Mikroprozessor-Untereinheit umfaßt, die mittels eines Programms die Reduktionsmittelrate M_{R} aus den mittels der Mittel erfaßten betriebsrelevanten Parameter des Abgases, des Katalysators und gegebenenfalls des Motors bestimmt. Auf diese Weise ist es möglich, die eigentliche Berechnung der Reduktionsmittelrate M_{R} gemäß des zugrundeliegenden Expertenwissens software-mäßig durchzuführen, so daß die Bestimmung der Reduktionsmittelrate M_{R} entgegen der vorangegangenen Ausgestaltung mit Kennfeldvergleich einfach und gegebenenfalls sogar durch Fuzzy-Logik durchgeführt werden kann. Besonders mittels Fuzzy-Logik können die vielfältigen betriebsrelevanten Parameter relativ zueinander und ihre absoluten Werte ihrem Wert für die Dosierung des Reduktionsmittels entsprechend gewichtet werden.

Weitere vorteilhafte Ausgestaltungen der Erfindung sind den übrigen Unteransprüchen zu entnehmen.

Ausführungsbeispiele der Erfindung werden anhand von fünf Figuren näher erläutert. Dabei zeigen:
- Figur 1: in schematischer Darstellung die Abgasleitung eines 300 kW-ladeluftgekühlten Dieselmotors mit gesteuerter Einbringung eines Reduktionsmittels in das stickoxidhaltige Abgas;
- Figur 2: den qualitativen Verlauf der katalytischen Aktivität eines DeNOₓ-Katalysators in Abhängigkeit von der Temperatur;
- Figur 3: den qualitativen Verlauf der spezifischen Speicherkapazität C_{R} eines DeNOₓ-Katalysators für ein Reduktionsmittel in Abhängigkeit von der Temperatur;
- Figur 4: den qualitativen Verlauf der katalytischen Aktivität k eines DeNOₓ-Katalysators in Abhängigkeit von der Gesamtbetriebszeit t_{B}; und
- Figur 5: das Flußdiagramm einer Ablauffolge zur Bestimmung der Reduktionsmittelrate M_{R}.

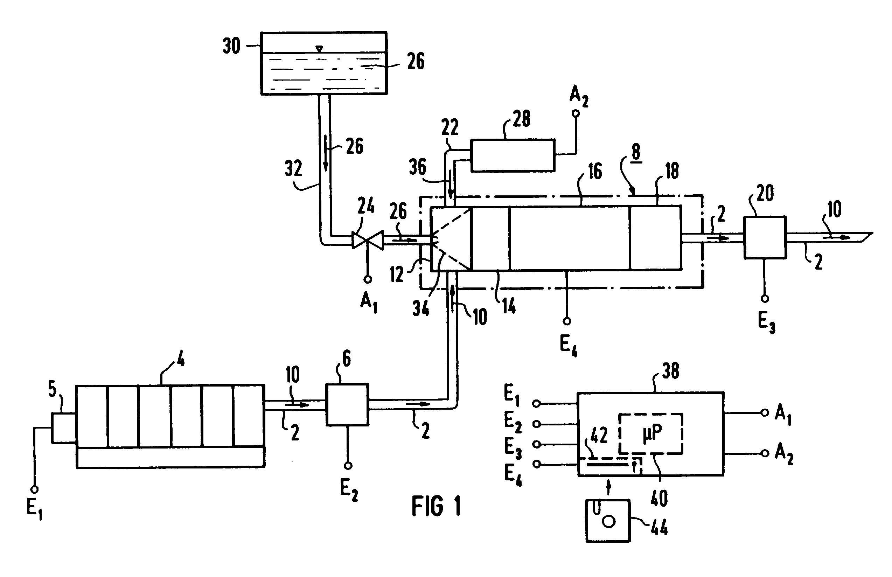

Figur 1 zeigt in schematischer Darstellung die Abgasleitung 2 eines 300 kW-ladeluftgekühlten Dieselmotors 4 mit einer an den Dieselmotor 4 angeschlossenen Meßstelle 5. In der Abgasleitung 2 sind der Reihe nach eine weitere Meßstelle 6, eine Katalysatoreinheit 8 und eine zusätzliche Meßstelle 20 eingebaut. In Strömungsrichtung eines Abgases 10 umfaßt die Katalysatoreinheit 8 der Reihe nach eine Einlaufkammer 12, einen Hydrolysekatalysator 14, einen DeNOₓ-Katalysator 16 und einen Oxidationskatalysator 18. Außer der Abgasleitung 2 sind an die Einlaufkammer 12 der Katalysatoreinheit 8 eine Blaubrenner-Abgasleitung 22 und eine Reduktionsmittelzuführungsleitung 32 mit einem einstellbaren Eindüsventil 24 für die gesteuerte Zugabe eines Reduktionsmittels 26 angeschlossen. Über die Blaubrenner-Abgasleitung 22 wird bedarfsweise heißes Abgas 36 eines Blaubrenners 28 in die Einlaufkammer 12 eingeleitet. Das Reduktionsmittel 26, im Ausführungsbeispiel eine wäßrige Harnstofflösung, wird in einem Reduktionsmitteltank 30 bevorratet und über die Reduktionsmittelzuführungsleitung 32 dem Eindüsventil 24 zugeführt. Mittels des Eindüsventils 24 wird das Reduktionsmittel 26 innerhalb einer Zone, die von Lochblechen 34 gegen die Wandungen der Einlaufkammer 12 begrenzt ist, in die Einlaufkammer 12 eingedüst. Das Abgas 10 und gegebenenfalls das Blaubrennerabgas 36 treten außerhalb dieser Zone in die Einlaufkammer 12 ein; sie durchdringen die Löcher in den Lochblechen 34 und reißen dabei das in die Einlaufkammer 12 eingedüste Reduktionsmittel 26 mit sich. Hierdurch wird verhindert, daß sich das Reduktionsmittel 26 auf den Wänden der Einlaufkammer 12 nachteiligerweise absetzt.

Zur Einstellung der in das Abgas 10 eindosierten Reduktionsmittelrate M_{R} ist eine Kontrolleinheit 38 mit einer Mikroprozessor-Untereinheit 40 vorgesehen. Über Eingänge E₁ bis E₄ erfaßt die Kontrolleinheit 38 betriebsrelevante Parameter, deren Kenntnis zur Einstellung der geigneten Reduktionsmittelrate M_{R} erforderlich sind. Mittels der Meßstelle 5, die eine Reihe von Sensoren umfaßt, werden der Luftmassenstrom, der Regelstangenweg, der der Stellung der Dieseleinspritzeinrichtung entspricht, der Ladedruck und die Drehzahl des Dieselmotors 4 erfaßt. Diese Daten liegen am Eingang E₁ an.

Am Eingang E₂ liegen die (z.B. mittels der weiteren Meßstelle 6 gemessenen) betriebsrelevanten Parameter des Abgases 10, hier dessen Temperatur, Druck und Massenstrom an. Im Ausführungsbeispiel werden der Massenstrom und der Druck aus den am Eingang E₁ vorliegenden Parametern des Dieselmotors 4 berechnet. Es wäre auch möglich, den Druck und auch den Massenstrom über separate Sensoren in der weiteren Meßstelle 6 zu messen.

Am Eingang E₃ liegt die mittels der zusätzlichen Meßstelle 20 hinter der Katalysatoreinheit 8 gemessene Temperatur des Abgases 10 vor.

Am Eingang E₄ liegen die betriebsrelevanten Parameter der Katalysatoreinheit 8 vor, und zwar deren katalytische Aktivität und deren Druck- und Temperaturverlauf, deren spezifische Speicherkapazität C_{R} für das Reduktionsmittel 26 und deren Druck-und Temperaturverlauf und deren physikalische Größe, wie z.B. Gewicht der katalytisch aktiven Masse, Geometrie und Wärmeübergang. Diese Parameter können beispielsweise auf einer Beipack-Diskette 44 als Ergänzung zur Katalysatoreinheit 8 abgelegt sein. Sie können mittels eines Diskettenlaufwerks 42, das in der Kontrolleinheit 38 eingebaut ist, in die Mikroprozessor-Untereinheit 40 geladen (implementiert) werden.

Über einen Ausgang A₁ wird das Eindüsventil 24 für das Reduktionsmittel 26 gesteuert und damit eingestellt. Die Einstellung der mittels des Eindüsventils 24 in das Abgas 10 eindosierten Reduktionsmittelrate M_{R} erfolgt dabei in Abhängigkeit von den betriebsrelevanten Parametern des Motors 4, des Abgases 10 und des Katalysator 8, was nachfolgend noch näher erläutert wird. Über einen Ausgang A₂ kann der Blaubrenner 28 bedarfsweise ein- und ausgeschaltet werden.

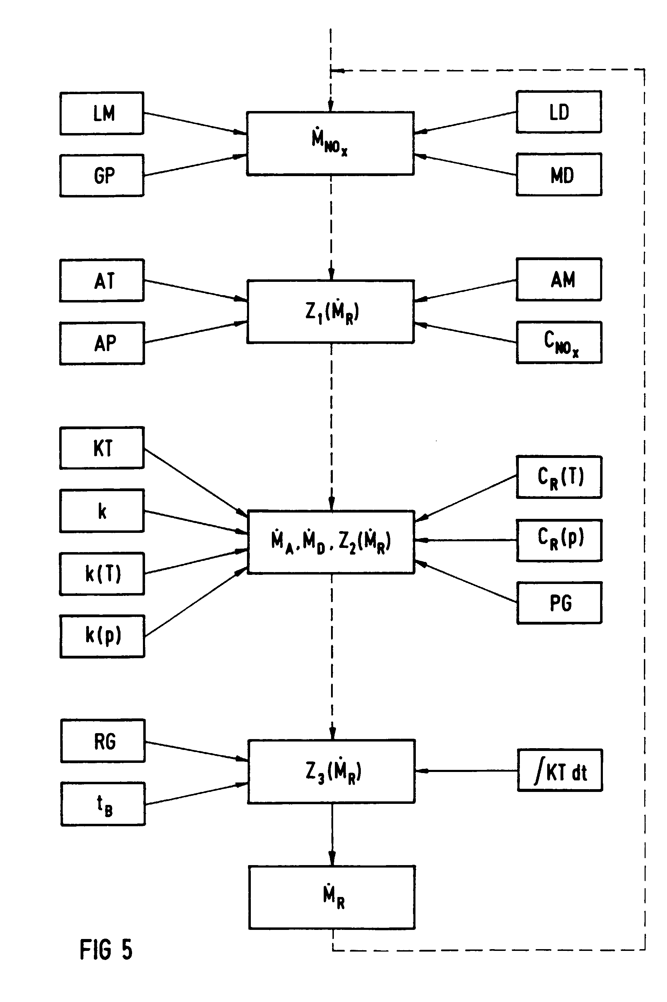

Ein Ablaufplan zur Bestimmung der Reduktionsmittelrate M_{R} ist in Figur 5 gezeigt. Beim Betrieb des Dieselmotors 4 wird zunächst mittels der Kontrolleinheit 38 durch Erfassung der mittels der Meßstelle 5 gemessenen Parameter der Stickoxidgehalt im Abgas 10 bestimmt. Dies erfolgt im besonderen in der Mikroprozessor-Untereinheit 40, die durch Kennfeldvergleich der Parameter Luftmassenstrom LM, Regelstangenweg GP, Ladedruck LD und Motordrehzahl MD die Stickoxidrate M_{NOₓ} hard- oder softwaremäßig bestimmt, wie dies beispielsweise in der DE-OS 36 15 021 beschrieben ist.

Aus den betriebsrelevanten Parametern des Abgases, wie z. B. Abgastemperatur AT, Abgasdruck AP, Abgasmassenstrom AM und Stickoxidkonzentration C_{NOx} wird entsprechend dem Wert M_{NOₓ} für die Stickoxidrate ein erster Zwischenwert Z₁(M_{R}) für die Reduktionsmittelrate M_{R} bestimmt.

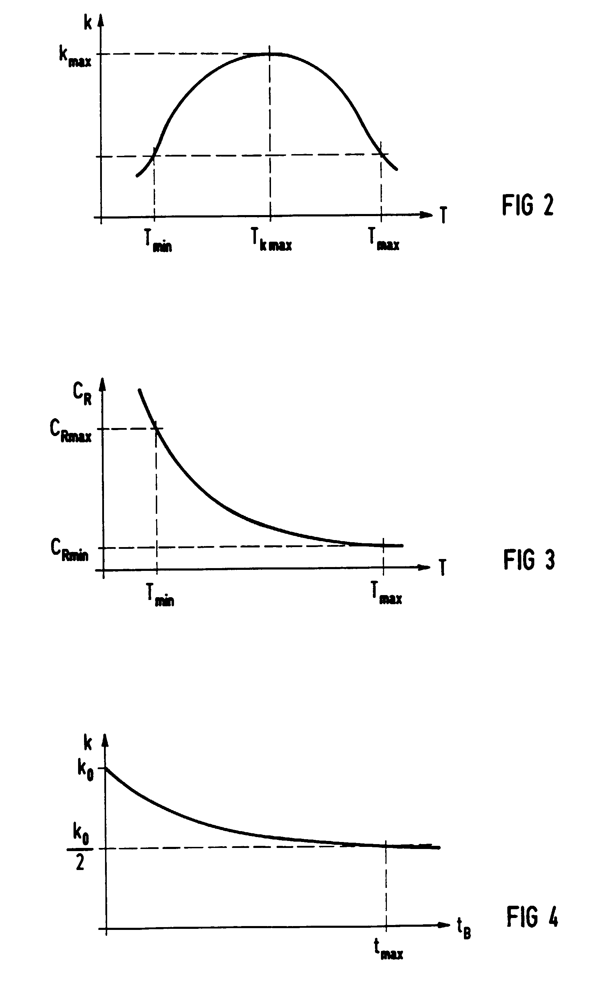

Anschließend wird aufgrund der Messung der Temperatur des Abgases 10 an den Meßstellen 6, 20 mittels der Kontrolleinheit 38 die Temperatur KT der Katalysatoreinheit 8 bestimmt, und zwar beispielsweise rechnerisch durch Mittelwertbildung oder durch Integration der Differentialgleichung für den Wärmeübergang der Katalysatoreinheit 8. Durch Vergleich mit dem Druck- und Temperaturverlauf k(T) bzw. k(p) der katalytischen Aktivität k der Katalysatoreinheit 8, der beispielsweise für die Temperatur gemäß Figur 2 gegeben sein kann, wird die katalytische Aktivität bestimmt. Für die Temperatur T(kₘₐₓ) und den Druck p(kₘₐₓ), bei der die Katalysatoreinheit 8 seine maximale katalytische Aktivität kₘₐₓ aufweist, bedeutet dies, daß in der Kontrolleinheit 38 zunächst ein zweiter Zwischenwert Z₂(M_{R}) der Reduktionsmittelrate M_{R} gebildet wird, der bezogen auf die eingangs im Abgas 10 enthaltenen Stickoxidrate M_{NOₓ} nur geringfügig unterstöchiometrisch ist. Für Temperaturen unterhalb oder oberhalb dieser Temperatur T(kₘₐₓ) wird dieser zweite Zwischenwert Z₂(M_{R}) entsprechend dem Abfall der katalytischen Aktivität k (vgl. Figur 2) verringert. Diese Anpassung des zweiten Zwischenwertes wird dabei mit der Anpassung an den Druckverlauf der katalytischen Aktivität überlagert. Der Druckverlauf ist dabei mit zunehmendem Absolutdruck am Katalysator ansteigend.

Unter Berücksichtigung des quantitativen Zusammenhangs zwischen der druck- und temperaturabhängigen spezifischen Speicherkapazität C_{R}(p) bzw. C_{R}(T) für das Reduktionsmittel 26 der Katalysatoreinheit 8, wie deren möglicher Temperaturverlauf C_{R}(T) beispielsweise qualitativ in Figur 3 dargestellt ist, kann mittels der Kontrolleinheit 38 die infolge von positiven zeitlichen Temperaturänderungen von der Katalysatoreinheit 8 desorbierende Reduktionsmittelrate M_{D} bestimmt werden. Um diese wird der zuvor gebildete zweite Zwischenwert verringert, was dann der tatsächlich netto in die Katalysatoreinheit 8 eingebrachten Reduktionsmittelrate M_{R} entsprechen kann. Dies bedeutet im besonderen, daß bei positiven Lastsprüngen des Dieselmotors 4, bei dem die Abgastemperatur AT, der Stickoxidgehalt C_{NOx} und der Massenstrom AM des Abgases zum Teil drastisch ansteigen, die in der Katalysatoreinheit 8 zur Umsetzung der Stickoxide benötigte Reduktionsmittelmenge zunächst zumindest teilweise von der vom Katalysator 8 desorbierten Reduktionsmittelrate M_{D} aufgebracht wird, wodurch zunächst entsprechend weniger Reduktionsmittel 26 mittels des Eindüsventils 24 in die Einlaufkammer 12 eingedüst wird. Analog wird bei negativen Lastsprüngen entsprechend der bevorstehenden Temperaturabsenkung und der verstärkten Adsorption von Reduktionsmittel 26, d. h. entsprechend einer adsorbierten Reduktionsmittelrate M_{A}, mehr Reduktionsmittel 26 zugeführt, als der ankommenden Stickoxidrate M_{NOₓ} entspricht, um die Katalysatoreinheit 8 jederzeit auf einem bevorzugten Füllstand, der im allgemeinen vom maximalen Füllstand abweicht, zu halten.

Während jedoch mit einer Anhebung der Dosierung des Reduktionsmittels 26 im Falle eines negativen Lastsprungs auf eine tatsächlich erfolgte Temperaturabsenkung an der Katalysatoreinheit 8 gewartet wird, erfolgt eine Zurücknahme der Dosierung des Reduktionsmittels 26 im Falle eines positiven Lastsprungs bereits bei einer Vergrößerung des Regelstangenwegs GP (Gaspedal weiter durchgetreten), ohne eine Zunahme der Temperatur T an der Katalysatoreinheit 8 abzuwarten. Die zu erwartende Temperaturerhöhung wird anhand der betriebsrelevanten Daten mittels der Kontrolleinheit 38 vorausberechnet.

Einer Uberladung der Katalysatoreinheit 8 mit dem Reduktionsmittel 26 wird dadurch in diesen Fällen wirksam vorgebeugt.

Das mittels des Eindüsventils 24 in die Einlaufkammer eingebrachte Reduktionsmittel 26 wird dabei mittels des Abgases 10 in den Hydrolysekatalysator 14 geführt. Dort hydrolysiert die im Ausführungsbeispiel verwendete wäßrige Harnstofflösung zu Ammoniak, Kohlendioxid und Wasser. Die Hydrolyse wird durch im Hydrolyse-Katalysator 14 enthaltene Edelmetall-Bestandteile und die dort herrschende erhöhte Temperatur verursacht. Die Stickoxide werden zusammen mit dem Ammoniak durch die Kontaktierung am katalytisch aktiven Material des DeNOₓ-Katalysators 16 zu Stickstoff und Wasser umgesetzt. Auch die Kohlenwasserstoffe werden hier bei Temperaturen über 300° C bereits zu einem großen Teil katalytisch umgesetzt. An dem dem DeN_{Ox}-Katalysator 16 folgenden Oxidationskatalysator 18 wird eine katalytische Umsetzung der noch im Abgas 10 enthaltenen Kohlenwasserstoffe und Kohlenmonoxid sowie eine katalytische Nachverbrennung eines eventuell auftretenden geringen Ammoniakschlupfes erreicht.

Optional kann ein weiterer Schritt zur Bestimmung der Reduktionsmittelrate M_{R} durchgeführt werden. Um Alterungs- und Vergiftungseffekte an der Katalysatoreinheit 8, im besonderen am DeNOₓ-Katalysator 16, zu berücksichtigen, wird im Ausführungsbeispiel ein in Figur 4 dargestellter qualitativer Verlauf der katalytischen Aktivität k in Abhängigkeit von der Gesamtbetriebszeit t_{B} beispielsweise über die betriebsrelevanten Parameter der Katalysatoreinheit 8 in der Kontrolleinheit 38 implementiert und berücksichtigt. Dies führt dazu, daß die entsprechend der im Abgas enthaltenen Stickoxidrate M_{NOₓ} in das Abgas zudosierte Reduktionsmittelrate M_{R}, d. h. zunächst der zweite Zwischenwert Z₂(M_{R}), mit zunehmender Gesamtbetriebszeit t_{B} verringert wird. Dies kann soweit ausgestaltet werden, daß dem Betreiber des Dieselmotors 4 bei Erreichen einer Gesamtbetriebszeit tₘₐₓ (vgl. Figur 4), bei der die Katalysatoreinheit 8 beispielsweise nur noch die halbe Anfangsaktivität k₀ hat, von der Kontrolleinheit 38 eine Aufforderung zum Austausch der Katalysatoreinheit 8 bekommt. Um dabei die während der Betriebszeit herrschende thermische Belastung der Katalysatoreinheit 8 bezüglich der Alterung noch stärker zu berücksichtigen, kann zusätzlich oder alternativ ein aus dem zweiten Zwischenwert Z₂(M_{R}) abgeleiteter dritter Zwischenwert Z₃(M_{R}) entsprechend der mit der Betriebsdauer t_{B} gewerteten Abgastemperaturen an der Katalysatoreinheit 8 bestimmt werden, der gegenüber dem zweiten Zwischenwert Z₂(M_{R}) verringert ist. Hierzu kann die Mikroprozessor-Untereinheit 40 beispielsweise das Integral über den zeitlichen Verlauf der Temperatur KT an der Katalysatoreinheit 8 berechnen.

Im Falle der Verfügbarkeit eines Ammoniak-Sensors an der Meßstelle 20 (oder eventuell ergänzt durch nicht dargestellte Meßstellen zwischen Katalysatorabschnitten) kann eine Kontrolle und gegebenenfalls eine Korrektur der Katalysatorparameter vorgenommen werden. Bei Unterschreitung eines festgelegten Grenzwertes kann ebenso eine Aufforderung zum Austausch der Katalysatoreinheit 8 gemeldet werden.

Eine weitere Korrektur des gebildeten dritten Zwischenwertes Z₃(M_{R}) erfolgt im Ausführungsbespiel optional durch eine Berücksichtigung der Raumgeschwindigkeit RG des Abgases 10 in der Katalysatoreinheit 8. Dabei ist die Katalysatoreinheit 8 auf eine maximale Raumgeschwindigkeit RGₘₐₓ, die anhand ihrer Geometrie abgeleitet wird, ausgelegt. Bei Überschreiten dieser maximalen Abgasraumgeschwindigkeit in der Katalysatoreinheit 8 wird dann der dritte Zwischenwert Z₃(M_{R}) verringert, wodurch vermieden wird, daß das Reduktionsmittel 26 mit dem Abgas 10 regelrecht durch die Katalysatoreinheit 8 "hindurchgeblasen" wird und folglich als unerwünschter Ammoniakschlupf resultiert. Diese Verringerung kann beispielsweise gemäß dem Verhältnis von maximaler Raumgeschwindigkeit zu der momentan herrschenden Abgasraumgeschwindigkeit vorgenommen werden.

Im Rückblick auf das vorstehend Erläuterte wird resümiert, daß durch die Berücksichtigung des Druck- und Temperaturverlaufs der katalytischen Aktivität k(p) bzw. k(T), der druck-und temperaturabhängigen spezifischen Speicherkapazität C_{R}(p) bzw. C_{R}(T) , der Abgasraumgeschwindigkeit RG und von Alterungs- und Vergiftungseffekten und gleichzeitiger Kenntnis betriebsrelevanter Parameter, wie z.B. Luftmassenstrom LM, Regelstangenweg RG, Ladedruck LD, Drehzahl MD, Abgastemperatur AT, Abgasmassenstrom AM, eine erfindungsgemäße Einstellung der in das Abgas eindosierten Reduktionsmittelrate M_{R} erreicht wird, die für jeden Betriebszustand des Dieselmotors 4 höchstmögliche Abscheideraten für die Stickoxide bei vernachlässigbar geringem Ammoniakschlupf bewirkt.

Zur weiteren Verbesserung dieser Einstellstrategie kann berücksichtigt werden, daß die entsprechend der im Abgas enthaltenen Stickoxidrate M_{NOₓ} in das Abgas 10 zudosierte Reduktionsmittelrate M_{R} sicherheitshalber zu Null gesetzt wird, wenn die Temperatur AT des Abgases eine Temperatur Tₘᵢₙ entsprechend Figur 2 unterschreitet oder eine Temperatur Tₘₐₓ entsprechend Figur 2 überschreitet. Dabei hängt es von dem Druck- und Temperaturverlauf der katalytischen Aktivität k der jeweils verwendeten Katalysatoreinheit 8 ab, bei welcher Temperatur Tₘᵢₙ und bei welcher Temperatur Tₘₐₓ liegen. Für den im Ausführungsbeispiel gewählten DeNOₓ-Katalysator 16, dessen katalytisch aktive Substanz Titanoxid TiO₂ und einen oder mehrere der Zusätze VₓMo_{y}O_{32-z} mit x, y ≥ 1; x + y < 12 und z ≤1, Wolframoxid WO₃, Molybdänoxid MO₃ und Vanadiumoxid V₂O₅ umfaßt, liegt die Temperatur Tₘᵢₙ bei etwa 240° C und die Temperatur Tₘₐₓ bei etwa 550° C. Innerhalb dieses Temperaturfensters werden ein Ammoniakschlupf sowie unerwünschte Reaktionen des Ammoniaks mit im Abgas enthaltenen Schwefel-oxiden sowie die Bildung unerwünschter Stickstoffverbindungen, wie z.B. Lachgas N₂O, besonders gut vermieden.

Dies hat zwar zur Konsequenz, daß bei Temperaturen unterhalb Tₘᵢₙ und Temperaturen oberhalb Tₘₐₓ des Abgases 10 keine oder nur eine sehr geringe Umsetzung der im Abgas 10 enthaltenen Stickoxide nach dem Verfahren der selektiven katalytischen Reduktion erfolgt. Im Fall der Temperaturunterschreitung von Tₘᵢₙ wiegt dieser Mangel nicht so schwer, da bei Lastzustanden des Dieselmotors 4, bei denen die Abgastemperatur unterhalb Tₘᵢₙ liegt, nur sehr geringe Stickoxidmengen erzeugt werden. Zur Vernichtung zumindest eines Teils der in einem solchen Abgas enthaltenen Stickoxide kann das Abgas 10 zumindest teilweise nach Durchlaufen einer Ladeturbine eines hier nicht weiter dargestellten Turboladers in die Ansaugluft des Dieselmotors 4 rezirkuliert werden.

Im Fall einer Temperatur T des Abgases 10 oberhalb der Temperatur Tₘₐₓ können Mittel zur Kühlung des Abgases zugeschaltet werden, die bewirken, daß die Temperatur des Abgases 10 wieder unter die Temperatur Tₘₐₓ sinkt. Dies kann beispielsweise durch Einleiten des Abgases 10 in eine hier nicht dargestellte Kühlstrecke, z.B. ein Luft/Luft-Wärmetauscher, oder durch Einschalten einer Fahrtwindkühlung für einen Abschnitt der Abgasleitung 2 und/oder eine Eindüsung von Wasser in das Abgas 10 bewirkt werden.

Um bei der Desorptionsrate M_{D} von einem definierten Anfangswert ausgehen zu können, ist es vorteilhaft, wenn die Katalysatoreinheit 8 vor der Inbetriebnahme des Dieselmotors 4 frei von Reduktionsmitteln 26 und Kohlenwasserstoffen ist. Dies erhöht gleichzeitig den Sicherheitsspielraum, der bei der Zudosierung des Reduktionsmittels 26 zur Vermeidung eines Reduktionsmittelschlupfes ausgenutzt werden kann. Diese "Entleerung" der Katalysatoreinheit 8 kann beispielsweise durch einen sich an den Nutzungsbetrieb anschließenden kurzzeitigen Leerlaufbetrieb bei eingeschaltetem Blaubrenner 28 und/oder durch Einschalten des Blaubrenners 28 vor Inbetriebnahme des Dieselmotors 4 durchgeführt werden.

Das gemäß der Figur 5 durchgeführte Verfahren zur Bestimmung der Reduktionsmittelrate M_{R} kann mittels der bekannten Kontrolleinheiten, z. B. Rechner auf Hybridbasis, mehrfach pro Sekunde durchgeführt werden.

Wenn die Meßstelle 6 mit einem Sensor zur Messung der Stickoxidkonzentration und des Volumenstromes des Abgases 10 ausgerüstet ist, ergibt sich ein gegenüber Figur 1 einfacherer Aufbau. Weil die an der Katalysatoreinheit 8 ankommende Stickoxidrate M_{NOₓ} nun direkt aus dem Volumenstrom und der Stickoxidkonzentration des Abgases 10 bestimmt wird, ist nun nur noch die Erfassung des Luftmassenstroms des Dieselmotors 4 über den Eingang E₁ erforderlich. Das bezüglich Figur 1 erläuterte Verfahren sowie die in Figur 1 dargestellte Einrichtung zur Dosierung des Reduktionsmittels 26 in das stickoxidhaltige Abgas 10 des Dieselmotors 4 bleiben jedoch ansonsten unverändert.

Fast trivial wird die Einstellung der Reduktionsmittelrate M_{R}, wenn die Meßstellen 6 und 20 Sensoren zur Messung der Stickoxid- bzw. zur Stickoxid- und Reduktionsmittelkonzentration umfassen. Die Reduktionsmittelrate M_{R} kann dann anhand der Stickoxidkonzentration im Abgas 10 eingestellt und mittels der mit der Meßstelle 20 hinter dem Katalysator 8 gemessenen Stickoxid- und Reduktionsmittelkonzentration im Abgas 10 mittels der Kontrolleinheit 38 beispielsweise im Millisekunden-Bereich nachgeregelt werden.

## Patentansprüche

1. Verfahren zur gesteuerten Einbringung eines Reduktionsmittels (26) in ein stickoxidhaltiges Abgas (10) eines verbrennungsmotors (4) mit einer in der Abgasleitung (2) eingebauten Katalysatoreinheit (8) zur Stickoxidminderung, bei dem mindestens ein betriebsrelevanter Parameter des Abgases (10), mindestens ein betriebsrelevanter Parameter der Katalysatoreinheit (8) und ggfs. mindestens ein betriebsrelevanter Parameter des Motors (4) zur Bestimmung der Stickoxidrate M_{NOₓ} erfaßt werden, dadurch gekennzeichnet, daß entsprechend der Stickoxidrate M_{NOₓ} ein Zwischenwert Z₁(*M*_{*R*}) für die Reduktionsmittelrate *M*_{*R*} bestimmt wird, der um eine von der Katalysatoreinheit (8) desorbierte Reduktionsmittelrate M_{D} verringert wird oder um eine von der Katalysatoreinheit (8) adsorbierte Reduktionsmittelrate M_{A} erhöht wird.

2. Verfahren nach Anspruch 1,
**dadurch gekennzeichnet;** daß bei einer Bestimmung der desorbierten Reduktionsmittelrate M_{D} und der adsorbierten Reduktionsmittelrate M_{A} berücksichtigt wird, daß die spezifische Speicherkapazität C_{R} für das Reduktionsmittel mit steigender Abgastemperatur absinkt und mit steigendem Abgasdruck zunimmt.

3. Verfahren nach Anspruch 1 oder 2,
**dadurch gekennzeichnet,** daß die Ver,ringerung bereits bei einer zeitlichen änderung des Regelstangenweges, die einen positiven Lastsprung bewirkt, entsprechend einer Vorausberechnung der Temperatur T am Katalysator (8) durchgeführt wird.

4. Verfahren nach einem der Ansprüche 1 bis 3,
**dadurch gekennzeichnet**, daß die Erhöhung erst bei einer tatsächlich an der Katalysatoreinheit (8) erfolgten Temperaturabsenkung durchgeführt wird.

5. Verfahren nach einem der Ansprüche 1 bis 4,
**dadurch gekennzeichnet**, daß der Zwischenwert z₁ (*M*_{*R*}) mit sinkender Abgastemperatur abgesenkt und mit steigender Abgastemperatur angehoben wird, wenn die Abgastemperatur an der Katalysatoreinheit (8) niedriger als eine Temperatur T(kₘₐₓ) ist, bei der die Katalysatoreinheit (8) maximale katalytische Aktivität kₘₐₓ aufweist.

6. Verfahren nach einem der anspruch 1 bis 5,
**dadurch gekennzeichnet**, daß der zwischenwert Z₁(*M*_{*R*}) mit steigender Abgastemperatur abgesenkt und mit sinkender Abgastemperatur angehoben wird, wenn die Abgastemperatur an der Katalysatoreinheit (8) höher als die Temperatur T(kₘₐₓ) ist, bei der die Katalysatoreinheit (8) maximale katalytische Aktivität kₘₐₓ aufweist.

7. Verfahren nach einem der Ansprüche 1 bis 6,
**dadurch gekennzeichnet**, daß der Zwischenwert bei Überschreiten einer maximalen Raumgeschwindigkeit, für die die Katalysatoreinheit (8) ausgelegt ist, verringert wird.

8. Verfahren nach einem der Ansprüche 1 bis 7,
**dadurch gekennzeichnet**, daß der Zwischenwert mit zunehmender Betriebsdauer t_{B} verringert wird.

9. Verfahren nach Anspruch 8,
**dadurch gekennzeichnet**, daß der Zwischenwert entsprechend der mit der Betriebsdauer t_{B} gewerteten Abgastemperaturen an der Katalysatoreinheit (8) verringert wird.

10. Verfahren nach einem der Ansprüche 1 bis 9,
**dadurch gekennzeichnet**, daß die Katalysatoreinheit (8) vor Inbetriebnahme des Verbrennungsmotors (4) vom Reduktionsmittel (26) und von Kohlenwasserstoffen durch Blaubrennen befreit wird.

11. Verfahren nach einem der Ansprüche 1 bis 10,
**dadurch gekennzeichnet**, daß als betriebsrelevante= Parameter des Motors (4) der Luftmassenstrom (LM), der der Stellung der Kraftstoffeinspritzeinrichtung entsprechende Regelstangenweg (GP), der Ladedruck (LD) und/oder die Motordrehzahl (MD) vorgesehen ist.

12. Verfahren nach einem der Ansprüche 1 bis 11,
**dadurch gekennzeichnet,** daß als betriebsrelevanter Parameter des Abgases (10) dessen Temperatur (AT), dessen Druck (AP), dessen Massenstrom (AM) und dessen Stickoxidkonzentracion (C_{NOx}) vorgesehen ist, und zwar vorzugsweise alle gemeinsam.

13. Verfahren nach einem der Ansprüche 1 bis 12,
**dadurch gekennzeichnet**, daß als betriebsrelevanter Parameter der Katalysatoreinheit (8) deren Temperatur (KT), deren katalytische Aktivität (k) mit Druck-und Temperaturverlauf (k(p) bzw. k(T)), deren spezifische Speicherkapazität C_{R} für das Reduktionsmittel (26) mit Druck-und Temperaturverlauf (C_{R}(p) bzw. C_{R}(T)) und deren physikalische Große, wie z.B. Gewicht der katalytisch aktiven Masse, Geometrie und Wärmeübergang, vorgesehen ist, und zwar vorzugsweise alle gemeinsam.

14. Einrichtung zur gesteuerten Einbringung eines Reduktionsmittels (26) in ein stickoxidhaltiges Abgas (10) eines Verbrennungsmotors (4) mit einer in der Abgasleitung (2) eingebauten Katalysatoreinheit (8) zur Stickoxidminderung, zur Durchführung des Verfahrens nach einem der Ansprüche 1 bis 13,
**dadurch gekennzeichnet,** daß eine Kontrolleinheit (38), dieser Kontrolleinheit (38) zugeordnete Mittel (5, 6, 20, 42, 44) zur Erfassung von mindestens einem betriebsrelevanten Parameter des Abgases (10), von mindestens einem betriebsrelevanten Parameter der Katalysatoreinheit (8) und ggf. von mindestens einem betriebsrelevanten Parameter des Motors (4) und eine der Kontrolleinheit (38) zugeordnete Reduktionsmittelzuführungs-Einheit (24, 30, 32), mit der ein Reduktionsmittel (26) in Strömungsrichtung des Abgases (10) vor der Katalysatoreinheit (8) in die Abgasleitung (2) einbringbar ist, vorgesehen sind, wobei die Kontrolleinheit (38) zur Einstellung der in das Abgas (10) eingebrachten Reduktionsmittelrate M_{R} in Abhängigkeit von den betriebsrelevanten Parametern vorgesehen ist, und zwar unter Berücksichtigung einer von der Katalysatoreinheit (8) adsorbierten Reduktionsmittelrate M_{A} oder einer von der Katalysatoreinheit (8) desorbierten Reduktionsmittelrate M_{D}.

15. Einrichtung nach Anspruch 14,
**dadurch gekennzeichnet**, daß die Katalysatoreinheit (8) in Strömungsrichtung des Abgases (10) der Reihe nach einen Hydrolyse-Katalysator (14), einen DeNOₓ-Kanalysator (16) und gegebenenfalls einen Oxidationskatalysator (18) umfaßt.

16. Einrichtung nach Anspruch 14 oder 15,
**dadurch gekennzeichnet**, daß die Reduktionsmittelzuführungs-Einheit (24, 30, 32) ein mittels der Kontrolleinheit (38) einstellbares Eindüsventil (24) für das Reduktionsmittel (26), vorzugsweise eine wä␣rige Harnstofflösung, umfaßt.

17. Einrichtung nach einem der Ansprüche 14 bis 16,
**dadurch gekennzeichnet,** daß die Kontrolleinheit (38) einen Speicher für alle möglichen, für die Bestimmung der Reduktionsmittelrate M_{R} betriebsrelevanten Parameter des Abgases (10), der Katalysatoreinheit (8) und gegebenenfalls des Motors (4) umfaßt, und daß die Mittel (5, 6, 20, 42, 44) mit ihren Signalen einen entsprechenden Speicherwert für die Reduktionsmittelrate M_{R} abrufen, wobei der Speicherwert an einem ausgang (A₁) der Kontrolleinheit (38) zur Steuerung der Reduktionsmittelzuführungseinheit (24, 30, 32) anliegt.

18. Einrichtung nach einem der Ansprüche 14 bis 16,
**dadurch gekennzeichnet**, daß die Kontrolleinheit (18) eine Mikroprozessor-Untereit (40) umfaßt, die mittels eines Programms die Reduktionsmittelrate M_{R} aus den mittels der Mittel (5, 6, 20, 42, 44) erfaßten betriebsrelevanten Parametern des Abgases (10), der Katalysatoreinheit (8) und gegebenenfalls des Motors (4) bestimmt.

## Claims

1. Method for the controlled introduction of a reducing agent (26) into a nitrogen oxide-containing exhaust gas (10) of an internal combustion engine (4) with a catalytic converter unit (8) installed in the exhaust line (2) for the purpose of lowering the nitrogen oxide content, in which at least one operationally relevant parameter of the exhaust gas (10), at least one operationally relevant parameter of the catalytic converter unit (8) and, if required, at least one operationally relevant parameter of the engine (4) being recorded in order to determine the nitrogen oxide rate Ṁ_{NOₓ}, characterized in that, in accordance with the nitrogen oxide rate *Ṁ*_{NOₓ}, an intermediate value Z₁(*Ṁ*_{*R*}) for the reducing-agent rate *Ṁ*_{R} is determined, which is reduced by a reducing-agent rate Ṁ_{D} desorbed by the catalytic converter unit (8) or increased by a reducing-agent rate Ṁ_{A} adsorbed by the catalytic converter unit (8).

2. Method according to Claim 1, characterized in that, in a determination of the desorbed reducing-agent rate Ṁ_{D} and the adsorbed reducing-agent rate Ṁ_{A} account is taken of the fact that the specific storage capacity C_{R} for the reducing agent falls as the exhaust-gas temperature rises and increases as the exhaust-gas pressure rises.

3. Method according to Claim 1 or 2 characterized in that the lowering is carried out already at a time change in the control rod displacement which brings about a positive load jump, in accordance with a precalculation of temperature T at the catalytic converter (8).

4. Method according to one of Claims 1 to 3, characterized in that the increase is carried out only when a temperature reduction has actually occurred at the catalytic converter unit (8).

5. Method according to one of Claims 1 to 4, characterized in that the intermediate value Z₁(*Ṁ*_{*R*}) is lowered as the exhaust-gas temperature falls and raised as the exhaust-gas temperature rises if the exhaust-gas temperature at the catalytic converter unit (8) is lower than a temperature T (kₘₐₓ) at which the catalytic converter unit (8) has a maximum catalytic activity kₘₐₓ.

6. Method according to one of Claims 1 to 5, characterized in that the intermediate value Z₁(*Ṁ*_{*R*}) is lowered as the exhaust-gas temperature rises and raised as the exhaust-gas temperature falls if the exhaust-gas temperature at the catalytic converter unit (8) is higher than the temperature T (kₘₐₓ) at which the catalytic converter unit (8) has a maximum catalytic activity kₘₐₓ.

7. Method according to one of Claims 1 to 6, characterized in that the intermediate value is reduced when a maximum space velocity, for which the catalytic converter unit (8) is designed, is exceeded.

8. Method according to one of Claims 1 to 7 characterized in that the intermediate value is reduced as the duration of operation t_{B} increases.

9. Method according to Claim 8, characterized in that the intermediate value is reduced in accordance with the exhaust-gas temperatures at the catalytic converter unit (8), which are weighted in accordance with the duration of the operation T_{B}.

10. Method according to one of Claims 1 to 9, characterized in that the catalytic converter unit (8) is freed from the reducing agent (26) and from hydrocarbons by blue-flame burning before the internal combustion engine is put into operation.

11. Method according to one of Claims 1 to 10, characterized in that the air mass flow (LM), the control rod displacement (GP), the latter corresponding to the position of the fuel injection device, the charge pressure (LD) and/or the engine speed (MD) are/is provided as the operationally relevant parameter of the engine (4).

12. Method according to one of Claims 1 to 11, characterized in that the temperature (8), the pressure (AP), the mass flow (AM) and the nitrogen oxide concentration (C_{NOₓ}) of the exhaust gas (10), preferably all together, are provided as the operationally relevant parameter of the exhaust gas (10).

13. Method according to one of Claims 1 to 12, characterized in that the temperature (KT), the catalytic activity (J) with the pressure and temperature profile (k(p) and k(T) respectively), the specific storage capacity C_{R} for the reducing agent (26) with the pressure and temperature profile (C_{R}(p) and C_{R}(T) respectively) and the physical size such as, for example, the weight of the catalytically active mass, the geometry and heat transfer of the catalytic converter unit (8), preferably all together, are provided as the operationally relevant parameter of the catalytic converter unit (8).

14. Device for the controlled introduction of a reducing agent (26) into a nitrogen oxide-containing exhaust gas (10) of an internal combustion engine (4) with a catalytic converter unit (8) for lowering the nitrogen oxide content installed in the exhaust line (2), for carrying out the method according to one of Claims 1 to 13, characterized in that a monitoring unit (38), means (5, 6, 20, 42, 44), assigned to this monitoring unit (38), for recording at least one operationally relevant parameter of the exhaust gas (10), at least one operationally relevant parameter of the catalytic converter unit (8) and, if required, at least one operationally relevant parameter of the engine (4), and a reducing-agent feed unit (24, 30, 32), assigned to the monitoring unit (38), by means of which a reducing agent (26) can be introduced into the exhaust line (2) ahead of the catalytic converter unit (8) in the direction of flow of the exhaust gas (10), are provided, the monitoring unit (38) being provided for the purpose of adjusting the reducing-agent rate Ṁ_{R} introduced into the exhaust gas (10) as a function of the operationally relevant parameters, specifically taking into account a reducing-agent rate Ṁ_{A} adsorbed by the catalytic converter unit (8) or a reducing-agent rate Ṁ_{D} desorbed by the catalytic converter unit (8).

15. The device according to Claim 14, characterized in that the catalytic converter unit (8) comprises, in series in the direction of flow of the exhaust gas (10), a hydrolysis catalyst (14), a DeNOₓ catalyst (16) and, if required, an oxidation catalyst (18).

16. Device according to Claim 14 or 15, characterized in that the reducing-agent feed unit (24, 30, 32) comprises an introduction valve (24), adjustable by means of the monitoring unit (38), for the reducing agent (26), preferably an aqueous urea solution.

17. Device according to one of Claims 14 to 16, characterized in that the monitoring unit (38) comprises a memory for all possible parameters of the exhaust gas (10), the catalytic converter unit (8) and, if required, the engine (4) operationally relevant for the determination of the reducing-agent rate Ṁ_{R}, and in that the means (5, 6, 20, 42, 44) call up by means of their signals a corresponding memory value for the reducing-agent rate Ṁ_{R}, the memory value being applied to an output (A₁) of the monitoring unit (38) to control the reducing-agent feed unit (24, 30, 32).

18. Device according to one of Claims 14 to 16, characterized in that the monitoring unit (38) comprises a microprocessor subunit (40) which, by means of a programme, determines the reducing-agent rate Ṁ_{R} from the operationally relevant parameters, recorded by means of the means (5, 6, 20, 40, 44), of the exhaust gas (10), the catalytic converter unit (8) and, if required, the engine (4).

## Revendications

1. Procédé d'apport régulé d'un agent réducteur (26) à un gaz d'échappement (10) contenant des oxydes d'azote d'un moteur (4) à combustion interne, comportant une unité de catalyseur (8) qui est montée dans un conduit (2) pour le gaz d'échappement et qui est destinée à diminuer la teneur en oxyde d'azote, dans lequel au moins un paramètre du gaz d'échappement (10) qui est pertinent du point de vue du fonctionnement, au moins un paramètre de l'unité de catalyseur (8) qui est pertinent du point de vue du fonctionnement, et le cas échéant au moins un paramètre du moteur (4) qui est pertinent du point de vue du fonctionnement sont détectés pour déterminer le taux d'oxyde d'azote M_{NOx}, caractérisé en ce qu'il consiste à déterminer en fonction du taux d'oxyde d'azote M_{NOx} une valeur intermédiaire Z₁(Ṁ_{R}) pour le taux d'agent réducteur Ṁ_{R} qui est diminuée d'un taux d'agent réducteur Ṁ_{D} désorbé de l'unité de catalyseur (8) ou qui est augmentée d'un taux d'agent réducteur Ṁ_{A} adsorbé par l'unité de catalyseur (8).

2. Procédé suivant la revendication 1,
caractérisé en ce que l'on tient compte lors de la détermination du taux d'agent réducteur Ṁ_{D} désorbé et du taux d'agent réducteur Ṁ_{A} adsorbé, du fait que la capacité spécifique C_{R} d'emmagasinage de l'agent réducteur diminue lorsque la température du gaz d'échappement s'élève et augmente lorsque la pression du gaz d'échappement augmente.

3. Procédé suivant la revendication 1 ou 2,
caractérisé en ce que la diminution a lieu déjà pour une variation dans le temps du trajet de la tige de réglage qui provoque un saut positif de charge en fonction d'un calcul préalable de la température T du catalyseur (8).

4. Procédé suivant l'une des revendications 1 à 3,
caractérisé en ce que l'augmentation a lieu déjà pour un abaissement de température ayant lieu effectivement sur l'unité de catalyseur (8).

5. Procédé suivant l'une des revendications 1 à 4,
caractérisé en ce que la valeur intermédiaire Z₁(Ṁ_{R}) diminue lorsque la température du gaz d'échappement s'abaisse et augmente lorsque la température du gaz d'échappement s'élève, si la température du gaz. d'échappement sur l'unité de catalyseur (8) est plus basse qu'une température T(kₘₐₓ) pour laquelle l'unité de catalyseur (8) présente une activité catalytique maximum kₘₐₓ.

6. Procédé suivant l'une des revendications 1 à 5,
caractérisé en ce que la valeur intermédiaire Z₁(Ṁ_{R}) diminue lorsque la température du gaz d'échappement s'élève et augmente lorsque la température du gaz d'échappement s'abaisse, si la température du gaz d'échappement sur l'unité de catalyseur (8) est plus haute qu'une température T(kₘₐₓ) pour laquelle l'unité de catalyseur (8) présente une activité catalytique maximum kₘₐₓ.

7. Procédé suivant l'une des revendications 1 à 6,
caractérisé en ce que la valeur intermédiaire diminue lorsque l'on dépasse une vitesse spatiale pour laquelle l'unité de catalyseur (8) est conçue.

8. Procédé suivant l'une des revendications 1 à 7,
caractérisé en ce que la valeur intermédiaire diminue lorsque la durée de fonctionnement t_{B} augmente.

9. Procédé suivant la revendication 8,
caractérisé en ce que la valeur intermédiaire diminue en fonction des températures du gaz d'échappement sur l'unité de catalyseur (8) pondérées par la durée de fonctionnement t_{B}.

10. Procédé suivant l'une des revendications 1 à 9,
caractérisé en ce que l'unité de catalyseur (8) est, avant la mise en fonctionnement du moteur à combustion interne (4), débarrassée par combustion avec évaporation de l'agent réducteur (26) et des hydrocarbures.

11. Procédé suivant l'une des revendications 1 à 10,
caractérisé en ce qu'il est prévu comme paramètre du moteur (4) qui est pertinent du point de vue du fonctionnement le courant massique d'air (LM), le trajet de la tige de réglage (GP) correspondant au dispositif d'injection de carburant, la pression de suralimentation (LD) et/ou le régime (MD) du moteur.

12. Procédé suivant l'une des revendications 1 à 11,
caractérisé en ce qu'il est prévu comme paramètre du gaz d'échappement (10) qui est pertinent du point de vue du fonctionnement sa température (AT), sa pression (AP), son courant massique (AM) et sa concentration en oxyde d'azote (C_{NOx}) , et cela de préférence tous ensemble.

13. Procédé suivant l'une des revendications 1 à 12,
caractérisé en ce qu'il est prévu comme paramètre de l'unité de catalyseur (8) qui est pertinent du point de vue du fonctionnement sa température (KT), son activité catalytique (k) avec sa courbe de pression et de température (k(p) et k(T)), sa capacité d'emmagasinage C_{R} spécifique de l'agent réducteur (26) avec sa courbe de pression de température (C_{R}(p) et C_{R}(T)) et ses grandeurs physiques, comme par exemple le poids de la masse catalytiquement active, la géométrie et la transmission de chaleur, et cela de préférence tous ensemble.

14. Dispositif d'apport commandé d'un agent réducteur (26) au gaz d'échappement (10) contenant de l'oxyde d'azote d'un moteur à combustion interne (4) ayant une unité de catalyseur (8) montée dans le conduit (2) pour les gaz d'échappement en vue de diminuer les oxydes d'azote, ce dispositif étant destiné à la mise en oeuvre du procédé suivant l'une des revendication 1 à 13, caractérisé en ce qu'il est prévue une unité de contrôle (38), des moyens (5, 6, 20, 42, 44) associés à cette unité de contrôle (38) et destinée à détecter au moins un paramètre du gaz d'échappement (10) qui est pertinent du point de vue du fonctionnement, au moins un paramètre de l'unité catalyseur (8) qui est pertinent du point de vue du fonctionnement et le cas échéant au moins un paramètre du moteur (4) qui est pertinent au point de vue du fonctionnement, et une unité d'amenée d'agent réducteur (24, 30, 32) associée à l'unité de commande (38), et par laquelle un agent réducteur (26) peut être amené en amont dans le sens d'écoulement du gaz d'échappement (10) de l'unité de catalyseur (8) dans le conduit (2) pour le gaz d'échappement, l'unité de contrôle (38) étant prévue pour régler en fonction des paramètres qui sont pertinents du point de vue du fonctionnement, le taux d'agent réduction Ṁ_{R} introduit dans le gaz d'échappement (10), et cela en tenant compte d'un taux Ṁ_{A} d'agent réducteur adsorbé par l'unité de catalyseur (8) ou d'un taux d'agent réducteur Ṁ_{D} désorbé par l'unité de catalyseur (8).

15. Dispositif suivant la revendication 14,
caractérisé en ce que l'unité de catalyseur (8) comprend successivement dans le sens d'écoulement du gaz d'échappement (10) un catalyseur (14) d'hydrolyse, un catalyseur (16) DeNOₓ et le cas échéant un catalyseur (18) d'oxydation.

16. Dispositif suivant la revendication 14 ou 15,
caractérisé en ce que l'unité d'apport d'agent réducteur (24, 30, 32) comporte une vanne (34) d'injection de l'agent réducteur (26), de préférence une solution aqueuse, qui peut être réglée par l'unité de contrôle (38).

17. Dispositif suivant l'une des revendications 14 à16,
caractérisé en ce que l'unité de contrôle (38) comporte une mémoire pour tous les paramètres possibles du gaz d'échappement (10), de l'unité de catalyseur (8) et le cas échéant du moteur (4) qui sont pertinents du point de vue du fonctionnement pour la détermination du taux d'agent réducteur Ṁ_{R} et en ce que les moyens (5, 6, 20, 42, 44) interrogent par leurs signaux une valeur de mémoire adéquate pour le taux d'agent réducteur Ṁ_{R}, la valeur en mémoire s'appliquant à une sortie (A₁) de l'unité de contrôle (38) pour commander l'unité d'envoi d'agent réducteur (24, 30, 32).

18. Dispositif suivant l'une des revendications 14 à 16,
caractérisé en ce que l'unité de contrôle (38) comprend une sous-unité (40) à microprocesseur qui, au moyen d'un programme, détermine le taux d'agent réducteur Ṁ_{R} à partir des paramètres du gaz d'échappement (10), de l'unité de catalyseur (8) et, le cas échéant, du moteur qui sont pertinents du point de vue du fonctionnement et qui sont déterminés à l'aide des moyens (5, 6, 20, 42, 44).
